# EUROPEAN PATENT SPECIFICATION

(11) **EP 3 334 078 B1**
(45) Date of publication and mention of the grant of the patent: **01.01.2020**
(21) Application number: 16888778.4
(22) Date of filing: 04.02.2016
(51) Int. Cl.: H04L 5/00, H04L 1/18, H04W 16/10, H04L 27/00, H04W 16/14, H04W 72/04, H04W 84/04, H04W 74/08

(54) **PUSCH TRANSMISSION METHOD AND USER EQUIPMENT IN LAA-LTE SYSTEM**
VERFAHREN ZUR PUSCH-ÜBERTRAGUNG UND BENUTZERGERÄT IN LAA-LTE-SYSTEM
PROCÉDÉ DE TRANSMISSION DE PUSCH ET ÉQUIPEMENT UTILISATEUR DANS UN SYSTÈME LTE À LAA

(43) Date of publication of application: 13.06.2018
(73) Proprietor: Huawei Technologies Co., Ltd., Longgang District Shenzhen, Guangdong 518129 (CN)
(72) Inventor: LI, Xiaocui, Shenzhen Guangdong 518129 (CN); XU, Kai, Shenzhen Guangdong 518129 (CN)
(74) Representative: Goddar, Heinz J.
(86) International application number: PCT/CN2016/073542
(87) International publication number: WO 2017/132953

(56) References cited:
- WO-A1-2015/131686
- WO-A1-2016/148854
- CN-A- 101 931 958
- CN-A- 105 306 180
- CN-A- 105 307 180
- US-A1- 2014 362 780
- ITL: "On the UCI multiplexing for LAA with DL and UL transmission", 3GPP DRAFT; R1-153275, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050974051, Retrieved from the Internet: URL:http://www.3gpp.org/ftp/Meetings_3GPP_ SYNC/RAN1/Docs/ [retrieved on 2015-05-24]
- HUAWEI ET AL.: 'LBT Operation for LAA Uplink' 3GPP TSG-RAN WG2 MEETING #89BIS R2-151175 24 April 2015, XP050953246
- SONY: 'LM Measurements and Carrier Selection Procedure' 3GPP TSG-RAN WG2 MEETING #91BIS R2-154885 09 October 2015, XP051024117

## Description

### TECHNICAL FIELD

Embodiments of the present invention relate to communications technologies, and in particular, to a method for transmitting a physical uplink shared channel (Physical Uplink Shared Channel, PUSCH for short) in an LAA-LTE system and user equipment (User Equipment, UE for short).

### BACKGROUND

Spectrums used in a wireless communications system are classified into two types: a licensed spectrum (licensed spectrum) and an unlicensed spectrum (unlicensed spectrum). In a commercial mobile communications system, an operator needs to obtain the licensed spectrum by means of auction, and may carry out, by using a corresponding spectrum, a mobile communications operation activity only after being granted a license. The unlicensed spectrum does not need to be auctioned, and any one may legally use the unlicensed spectrum, for example, a Wireless Fidelity (Wireless Fidelity, WiFi) device sends or receives information in a frequency band of 2.4 GHz and a frequency band of 5 GHz. A carrier on the licensed spectrum is referred to as a licensed carrier, and a carrier on the unlicensed spectrum is referred to as an unlicensed carrier. With development of communications technologies, an amount of information transmitted in a wireless communications network is ever-increasing. Preempting the unlicensed spectrum to transmit information may improve a data throughput in the wireless communications network, so as to better meet a requirement of a user. US2014362780 A1 describes receiving an uplink grant over a licensed spectrum. A clear channel assessment (CCA) may be performed in response to the uplink grant to determine availability of an unlicensed spectrum. The CCA may be performed prior to a transmission associated with the uplink grant.

WO2016148854 A1 describes a method and apparatus that schedule user equipment uplink transmissions on an unlicensed carrier. Listen before talk can be performed to determine when a subframe is available for uplink transmission.

In a licensed-assisted access using Long Term Evolution (Licensed-Assisted Access Using Long Term Evolution, LAA-LTE) system, UE in the LAA-LTE system uses a channel resource by using a listen before talk (listen before talk, LBT for short) mechanism. LBT is a carrier sense multiple access (Carrier Sense Multiple Access, CSMA for short) technology. In a conventional LTE system, if the UE receives an uplink grant (UL grant) in a subframe n, the UE sends uplink data in a subframe n+4. In the LAA-LTE system, the UE cannot obtain at any moment an unlicensed carrier for uplink transmission. Therefore, even though the UE receives the uplink grant, the UE may not preempt an uplink resource when the UE needs to transmit uplink data. If the UE waits to send the uplink data when the UE obtains an unlicensed carrier next time, a delay time is relatively long.

### SUMMARY

Embodiments of the present invention provide a method for transmitting a PUSCH in an LAA-LTE system and user equipment. When a first unlicensed carrier is unavailable in a subframe n+k, the UE sends the PUSCH to a base station by using an alternate carrier or by using the first unlicensed carrier with a delay of 1 to m subframes, so that a delay in sending uplink data by the UE is reduced.

A first aspect of the present invention provides a method for transmitting a PUSCH in an LAA-LTE system. UE receives an uplink grant message in a subframe n on a first unlicensed carrier or a licensed carrier, and determines, according to the uplink grant message, to send the PUSCH in a subframe n+k on the first unlicensed carrier. The UE determines an alternate carrier when the first unlicensed carrier is unavailable in the subframe n+k, and sends the PUSCH to a base station by using the alternate carrier. Compared with a prior-art solution in which UE waits to send uplink data when the UE obtains an uplink grant next time, in this embodiment, the PUSCH is sent by using the alternate carrier, so that a delay in sending uplink data by the UE can be reduced.

In a possible implementation of the first aspect, when the PUSCH includes UCI, and the licensed carrier is available in the subframe n+k, the UE determines the licensed carrier as the alternate carrier, and sends the PUSCH to the base station in the subframe n+k by using the licensed carrier. The UE still sends the PUSCH by using the subframe n+k, so that the delay in sending uplink data by the UE is reduced.

In another possible implementation of the first aspect, when the PUSCH includes UCI, and the licensed carrier is unavailable in the subframe n+k, or when the PUSCH includes no UCI, the UE determines the alternate carrier from an unlicensed carrier that is allowed to use. In an implementation, the UE determines a second unlicensed carrier available in the subframe n+k as the alternate carrier, and sends the PUSCH to the base station in the subframe n+k by using the second unlicensed carrier. In another implementation, the UE determines the first unlicensed carrier as the alternate carrier, and sends the PUSCH to the base station in any one of a subframe n+k+1 to a subframe n+k+m by using the first unlicensed carrier, where m is a largest delay window, m is a positive integer greater than or equal to 2, and the largest delay window is configured by the base station.

A second aspect of the present invention provides a method for transmitting a PUSCH in an LAA-LTE system. UE receives an uplink grant message in a subframe n on a first unlicensed carrier or a licensed carrier, and determines, according to the uplink grant message, to send the PUSCH in a subframe n+k on the first unlicensed carrier. When the first unlicensed carrier is unavailable in the subframe n+k, the UE sends the PUSCH to a base station in any one of a subframe n+k+1 to a subframe n+k+m by using the first unlicensed carrier. The PUSCH is sent with a delay of a maximum of m subframes. Compared with a prior-art solution in which UE waits to send uplink data when the UE obtains an uplink grant next time, in this embodiment, a delay in sending uplink data can be reduced.

In the first aspect and the second aspect of the present invention, that the UE sends the PUSCH to a base station in any one of a subframe n+k+1 to a subframe n+k+m by using the first unlicensed carrier is specifically as follows: The UE successively attempts to send the PUSCH to the base station in the subframe n+k+1 to the subframe n+k+m on the first unlicensed carrier; and if the PUSCH is successfully sent in any subframe, ends a procedure; or if the PUSCH is not successfully sent in any subframe, the UE gives up sending the PUSCH to the base station.

A third aspect of the present invention provides UE. The UE includes a determining module and a sending module. The determining module is configured to determine an alternate carrier when a first unlicensed carrier is unavailable in a subframe n+k. The sending module is configured to send a PUSCH to a base station by using the alternate carrier. Before the determining module determines the alternate carrier, the UE receives, in a subframe n on the first unlicensed carrier or a licensed carrier, an uplink grant message sent by the base station, and determines, according to the uplink grant message, to send the PUSCH in the subframe n+k on the first unlicensed carrier. Compared with a prior-art solution in which UE waits to send uplink data when the UE obtains an uplink grant next time, in this embodiment, the PUSCH is sent by using the alternate carrier, so that a delay in sending uplink data by the UE can be reduced.

In a possible implementation of the third aspect, when the PUSCH includes UCI, and the licensed carrier is available in the subframe n+k, the determining module determines the licensed carrier as the alternate carrier; and the sending module sends the PUSCH to the base station in the subframe n+k by using the licensed carrier. The UE still sends the PUSCH by using the subframe n+k, so that the delay in sending uplink data by the UE is reduced.

In another possible implementation of the third aspect, when the PUSCH includes UCI, and the licensed carrier is unavailable in the subframe n+k, or when the PUSCH includes no UCI, the determining module determines the alternate carrier from an unlicensed carrier that is allowed to use. In an implementation, the determining module determines a second unlicensed carrier available in the subframe n+k as the alternate carrier; and the sending module sends the PUSCH to the base station in the subframe n+k by using the second unlicensed carrier. In another implementation, the determining module determines the first unlicensed carrier as the alternate carrier; and the sending module sends the PUSCH to the base station in any one of a subframe n+k+1 to a subframe n+k+m by using the first unlicensed carrier, where m is a largest delay window, and m is a positive integer greater than or equal to 2.

A fourth aspect of the present invention provides UE. The UE includes a determining module and a sending module. The determining module is configured to determine whether a first unlicensed carrier is available in a subframe n+k. The sending module is configured to: when the determining module determines that the first unlicensed carrier is unavailable in the subframe n+k, send a PUSCH to a base station in any one of a subframe n+k+1 to a subframe n+k+m by using the first unlicensed carrier. Compared with a prior-art solution in which UE waits to send uplink data when the UE obtains an uplink grant next time, in this embodiment, the PUSCH is sent with a delay of a maximum of m subframes, so that a delay in sending uplink data by the UE can be reduced.

In the implementations of the third aspect and the fourth aspect, the sending module is specifically configured to successively attempt to send the PUSCH to the base station in the subframe n+k+1 to the subframe n+k+m on the first unlicensed carrier; and if the PUSCH is successfully sent in any subframe, end a procedure; or if the PUSCH is not successfully sent in any subframe, give up sending the PUSCH to the base station. A fifth aspect of the present invention provides UE. The UE includes a processor, a memory, a transmitter, a receiver, and a system bus. The memory, the transmitter, the receiver, and the processor are connected and implement mutual communication by using the system bus. The memory is configured to store a computer execution instruction. The receiver is configured to receive an uplink grant message sent by a base station. The processor is configured to determine an alternate carrier when a first unlicensed carrier is unavailable in a subframe n+k. The transmitter is configured to send a PUSCH to the base station by using the alternate carrier. For a manner in which the processor determines the alternate carrier, refer to the manner provided in the first aspect of the present invention. Compared with a prior-art solution in which UE waits to send uplink data when the UE obtains an uplink grant next time, in this embodiment, the PUSCH is sent by using the alternate carrier, so that a delay in sending uplink data by the UE can be reduced.

A sixth aspect of the present invention provides UE. The UE includes a processor, a memory, a transmitter, a receiver, and a system bus. The memory, the transmitter, the receiver, and the processor are connected and implement mutual communication by using the system bus. The memory is configured to store a computer execution instruction. The receiver is configured to receive an uplink grant message sent by a base station. The processor is configured to determine whether a first unlicensed carrier is available in a subframe n+k. The transmitter is configured to: when the first unlicensed carrier is unavailable in the subframe n+k, send a PUSCH to the base station in any one of a subframe n+k+1 to a subframe n+k+m by using the first unlicensed carrier. For a specific sending manner of the transmitter, refer to the implementation of the second aspect of the present invention. Compared with a prior-art solution in which UE waits to send uplink data when the UE obtains an uplink grant next time, in this embodiment, the PUSCH is sent with a delay of a maximum of m subframes, so that a delay in sending uplink data by the UE can be reduced.

The embodiments of the present invention provide the method for transmitting a PUSCH in an LAA-LTE system and the user equipment. The method includes the following steps: The UE determines the alternate carrier when the first unlicensed carrier is unavailable in the subframe n+k, and the UE sends the PUSCH to the base station by using the alternate carrier; or when the first unlicensed carrier is unavailable in the subframe n+k, the UE sends the PUSCH to the base station in any one of the subframe n+k+1 to the subframe n+k+m by using the first unlicensed carrier. The PUSCH is sent by using the alternate carrier or with a delay of 1 to m subframes, so that the delay in sending uplink data by the UE is reduced.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic diagram of a correspondence between an uplink grant message and uplink data;
FIG. 2 is a flowchart of a method for transmitting a PUSCH in an LAA-LTE system according to Embodiment 1 of the present invention;
FIG. 3 is a flowchart of a method for transmitting a PUSCH in an LAA-LTE system according to Embodiment 2 of the present invention;
FIG. 4 is a schematic diagram in which UE sends a PUSCH by crossing from an unlicensed carrier to a licensed carrier;
FIG. 5 is a schematic diagram in which UE delays sending a PUSCH on one unlicensed carrier;
FIG. 6 is a schematic diagram in which UE sends a PUSCH by crossing from a first unlicensed carrier to a second unlicensed carrier;
FIG. 7 is a flowchart of a method for transmitting a PUSCH in an LAA-LTE system according to Embodiment 3 of the present invention;
FIG. 8 is a schematic structural diagram of UE according to Embodiment 4 of the present invention;
FIG. 9 is a schematic structural diagram of UE according to Embodiment 5 of the present invention;
FIG. 10 is a schematic structural diagram of UE according to Embodiment 6 of the present invention; and
FIG. 11 is a schematic structural diagram of UE according to Embodiment 7 of the present invention.

### DESCRIPTION OF EMBODIMENTS

The invention is defined by the appended claims. Embodiments not covered by the scope of the claims should be understood as examples useful for understanding the invention.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the scope of the present invention.

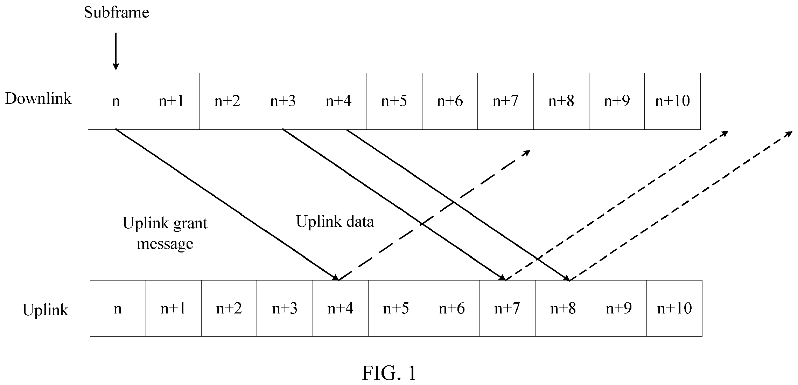

In a conventional LTE system, in a frequency division duplex (Frequency Division Duplex FDD for short) case, if UE receives an uplink grant message in a subframe n, the UE sends uplink data in a subframe n+4. FIG. 1 is a schematic diagram of a correspondence between an uplink grant message and uplink data. As shown in FIG. 1, a base station sends an uplink grant message in a subframe n on a downlink channel, UE receives the uplink grant message in the downlink subframe n, and the UE sends uplink data in a subframe n+4. If the base station sends the uplink grant message in a subframe n+3, the UE sends the uplink data in a subframe n+7. However, in an LAA system, it is assumed that the base station still sends the uplink grant message in the subframe n, but because the UE needs to perform LBT to preempt an unlicensed carrier, the UE may not occupy an uplink channel in the subframe n+4. In this case, it is necessary that the UE waits to send the uplink data when the UE obtains an uplink channel next time. Consequently, a delay is excessively long.

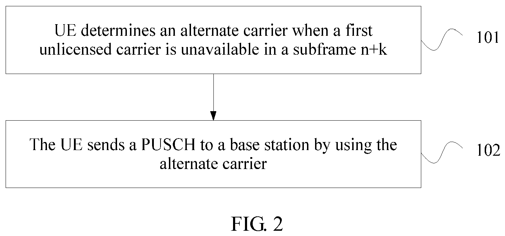

To resolve a prior-art problem, an embodiment of the present invention provides a method for transmitting a PUSCH in an LAA-LTE system. FIG. 2 is a flowchart of a method for transmitting a PUSCH in an LAA-LTE system according to Embodiment 1 of the present invention. As shown in FIG. 2, the method provided in this embodiment includes the following steps.

Step 101. UE determines an alternate carrier when a first unlicensed carrier is unavailable in a subframe n+k.

Before determining the alternate carrier, the UE receives an uplink grant message sent by a base station. The base station may send the uplink grant message to the UE by using the first unlicensed carrier or a licensed carrier. The uplink grant message is used to indicate that the UE can send uplink data. The UE can send the uplink data only after receiving the uplink grant message. In the foregoing step, n is a system frame number or a sequence number of a subframe in which the UE receives the uplink grant message sent by the base station, and n is 0 or a positive integer.

After receiving the uplink grant message, the UE determines, according to the uplink grant message, a subframe in which the PUSCH is to be sent, n+k is a system frame number or a sequence number of a subframe in which the UE determines, according to the uplink grant message, to send the PUSCH on the first unlicensed carrier, and k is a positive integer. For example, if a value of k is 4, the UE sends uplink data in a subframe n+4. Optionally, the uplink grant message may include information about the first unlicensed carrier, and the UE determines, according to the information that is included in the uplink grant message and is about the first unlicensed carrier, to send the PUSCH by using the first unlicensed carrier. Alternatively, the first unlicensed carrier is allocated when the UE accesses a network.

After receiving the uplink grant information, the UE listens, according to an LBT mechanism, to find whether the first unlicensed carrier is idle in the subframe n+k. If the UE finds, by means of listening, that the first unlicensed carrier is idle in the subframe n+k, the first unlicensed carrier is available in the subframe n+k, and the UE may send the PUSCH to the base station in the subframe n+k by using the first unlicensed carrier. If the UE finds, by means of listening, that a first unlicensed carrier is busy in the subframe n+k, the first unlicensed carrier is unavailable in the subframe n+k, and the UE cannot send the PUSCH to the base station in the subframe n+k by using the first unlicensed carrier.

In this embodiment, the UE determines an alternate carrier, and the alternate carrier may be a licensed carrier or an unlicensed carrier. When the alternate carrier is an unlicensed carrier, the alternate carrier may be the first unlicensed carrier, or may be an unlicensed carrier other than the first unlicensed carrier. When the alternate carrier is the first unlicensed carrier, the UE cannot send the PUSCH in the subframe n+k, but needs to send the PUSCH within a specific delay window.

Step 102. The UE sends the PUSCH to a base station by using the alternate carrier.

In this embodiment, the UE determines the alternate carrier when the first unlicensed carrier is unavailable in the subframe n+k, and sends the PUSCH to the base station by using the alternate carrier. In the method, a delay in sending uplink data by the UE is reduced when the first unlicensed carrier is unavailable in the subframe n+k.

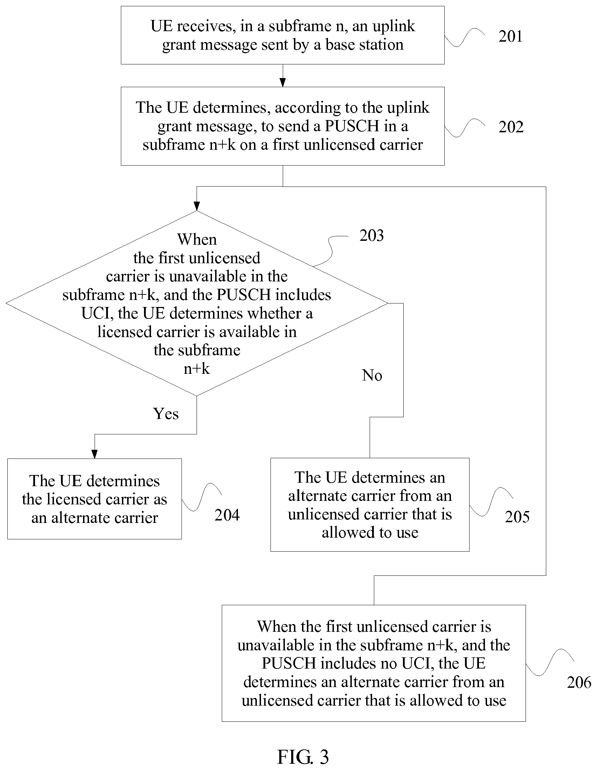

Based on the foregoing Embodiment 1, Embodiment 2 of the present invention provides a method for transmitting a PUSCH in an LAA-LTE system. FIG. 3 is a flowchart of the method for transmitting a PUSCH in an LAA-LTE system according to Embodiment 2 of the present invention. As shown in FIG. 3, the method provided in this embodiment may include the following steps.

Step 201. UE receives, in a subframe n, an uplink grant message sent by a base station.

Step 202. The UE determines, according to the uplink grant message, to send the PUSCH in a subframe n+k on a first unlicensed carrier.

Step 203. When the first unlicensed carrier is unavailable in the subframe n+k, and the PUSCH includes uplink control information (uplink control information, UCI for short), the UE determines whether a licensed carrier is available in the subframe n+k. The PUSCH can carry not only uplink data but also the UCI. The UCI generally includes a scheduling request (Scheduling Request), a hybrid automatic repeat request (Hybrid Automatic Repeat Request, HARQ for short)-acknowledgement/negative acknowledgement (ACK/NACK), and channel state information (Channel State Information, CSI for short). The CSI includes a channel quality indication (channel quality indication, CQI for short), a precoding matrix indicator (Precoding Matrix Indicator, PMI for short), and a rank indication (rank indication, RI for short).

The SR is used to request an uplink UL-SCH resource from the base station. The HARQ ACK/NACK is used to perform a HARQ acknowledgement for downlink data sent on a PDSCH. The CSI is used to notify the base station of downlink channel quality, so that the base station performs downlink scheduling. The UCI may be transmitted on the PUSCH, and in addition, the UCI may be transmitted on a physical uplink control channel (Physical Uplink Control Channel, PUCCH for short). For the UE, the UE knows a time point at which the UCI is to be transmitted on the PUSCH and a time point at which the UCI is to be transmitted on the PUCCH.

When the licensed carrier is available in the subframe n+k, step 204 is performed. When the licensed carrier is unavailable in the subframe n+k, step 205 is performed. Step 204. The UE determines the licensed carrier as an alternate carrier.

If the licensed carrier is available in the subframe n+k, the UE preferably selects the licensed carrier as the alternate carrier. The PUSCH includes the UCI, and the UCI is quite important for uplink transmission. Therefore, to ensure that the base station can accurately receive the UCI in a timely manner, the UE preferably selects the licensed carrier as the alternate carrier.

Step 205. The UE determines an alternate carrier from an unlicensed carrier that is allowed to use.

Step 206. When the first unlicensed carrier is unavailable in the sub frame n+k, and the PUSCH includes no UCI, the UE determines an alternate carrier from an unlicensed carrier that is allowed to use.

In this embodiment, when the PUSCH includes the UCI, and the licensed carrier is unavailable in the subframe n+k, or when the PUSCH includes no UCI, that the UE determines an alternate carrier from an unlicensed carrier that is allowed to use specifically falls into the following two cases:
(1) The UE determines the first unlicensed carrier as the alternate carrier.
   When one unlicensed carrier is allowed to use by the UE, the UE determines the unlicensed carrier that is allowed to use as the alternate carrier. In this case, the unlicensed carrier that is allowed to use is the first unlicensed carrier, that is, only the first unlicensed carrier is available for the UE. When multiple unlicensed carriers are allowed to use by the UE, the UE may determine the first unlicensed carrier as the alternate carrier.
(2) The UE determines a second unlicensed carrier available in the subframe n+k as the alternate carrier.
   When multiple unlicensed carriers are allowed to use by the UE, the UE determines, from the multiple unlicensed carriers that are allowed to use, the second unlicensed carrier available in the subframe n+k as the alternate carrier. A frequency used on the second unlicensed carrier and a frequency used on the first unlicensed carrier are different.

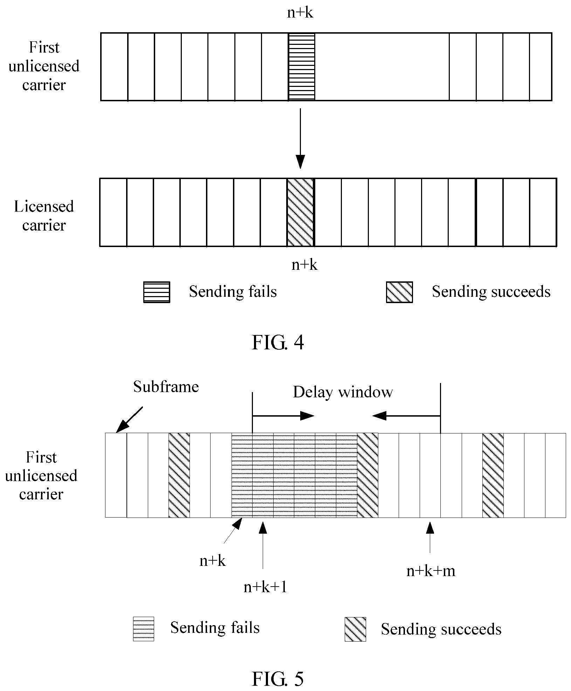

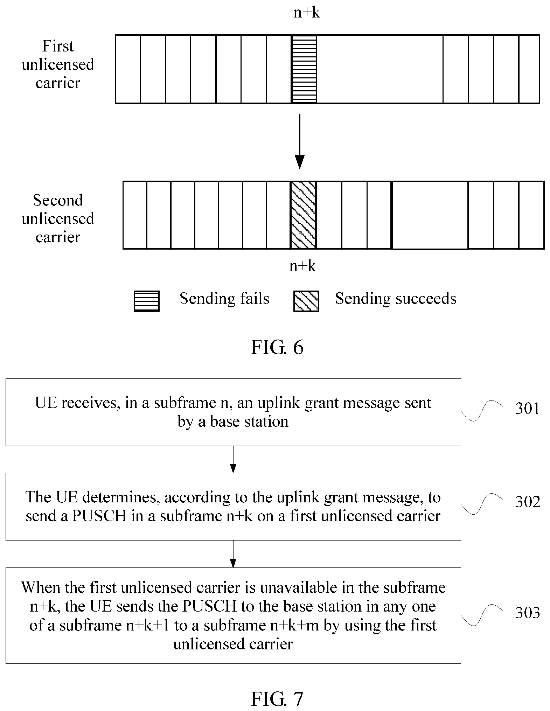

Step 207. The UE sends the PUSCH to the base station by using the alternate carrier.
(1) When the UE determines the licensed carrier as the alternate carrier, that the UE sends the PUSCH to the base station by using the alternate carrier is specifically as follows: The UE sends the PUSCH to the base station in the subframe n+k by using the licensed carrier. FIG. 4 is a schematic diagram in which UE sends a PUSCH by crossing from an unlicensed carrier to a licensed carrier. As shown in FIG. 4, the first unlicensed carrier is unavailable in the subframe n+k, and the UE sends the PUSCH on the licensed carrier in a cross-carrier manner. Because the licensed carrier is available in the subframe n+k, the UE still sends the PUSCH in the subframe n+k, and the UE does not need to delay sending uplink data.
(2). When the UE determines the first unlicensed carrier as the alternate carrier, that the UE sends the PUSCH to the base station by using the alternate carrier is specifically as follows: The UE sends the PUSCH to the base station in any one of a subframe n+k+1 to a sub frame n+k+m by using the first unlicensed carrier. A value of m is a subframe span between the subframe n+k+1 and the subframe n+k+m, or is a quantity of included subframes between the subframe n+k+1 and the subframe n+k+m; and m may also be referred to as a largest delay window, and m is a positive integer greater than or equal to 2. The largest delay window is a subframe span in which the UE is allowed to attempt to send the PUSCH to the base station, or is a window including multiple subframes in which the UE is allowed to attempt to send the PUSCH to the base station. The largest delay window m is configured by the base station. Optionally, the value of m may be configured by using radio resource control protocol (Radio Resource Control, RRC for short) signaling, and may be semi-statically configured.
   Specifically, the UE successively attempts to send the PUSCH to the base station in the subframe n+k+1 to the subframe n+k+m on the first unlicensed carrier, and if the PUSCH is successfully sent in any one of the subframe n+k+1 to the subframe n+k+m, ends a procedure. If the PUSCH is not successfully sent in any one of the subframe n+k+1 to the subframe n+k+m, the UE gives up sending the PUSCH to the base station. FIG. 5 is a schematic diagram in which UE delays sending a PUSCH on one unlicensed carrier. As shown in FIG. 5, the first unlicensed carrier is unavailable in the subframe n+k, and the UE attempts to send the PUSCH to the base station in the subframe n+k+1 to the subframe n+k+m on the first unlicensed carrier. In this case, the base station may continuously monitor whether there is uplink data sent in the subframe n+k+1 to the subframe n+k+m on the first unlicensed carrier, and the base station may obtain a location in which the UE sends uplink data.
(3) When the UE determines the second unlicensed carrier as the alternate carrier, that the UE sends the PUSCH to the base station by using the alternate carrier is specifically as follows: The UE sends the PUSCH to the base station in the subframe n+k by using the second unlicensed carrier. FIG. 6 is a schematic diagram in which UE sends a PUSCH by crossing from a first unlicensed carrier to a second unlicensed carrier. As shown in FIG. 6, the first unlicensed carrier is unavailable in the subframe n+k, and the UE sends the PUSCH on the second unlicensed carrier in a cross-carrier manner. Because the UE still sends the PUSCH in the subframe n+k, the UE does not need to delay sending uplink data.

In this embodiment, when the PUSCH includes the UCI, and the subframe n+k of the licensed carrier is available, the UE determines the licensed carrier as the secondary uplink carrier, and sends the PUSCH to the base station in the subframe n+k by using the licensed carrier. When the PUSCH includes the UCI, and the licensed carrier is unavailable in the subframe n+k, or when the PUSCH includes no UCI, the UE determines the alternate carrier from the unlicensed carrier that is allowed to use, and sends the PUSCH to the base station by using the alternate carrier. Therefore, a delay in sending the PUSCH to the base station by the UE may be reduced when the first unlicensed carrier is unavailable in the subframe n+k.

It should be noted that Embodiment 2 lists only one method for determining the alternate carrier, and for the UE, there may also be another method for determining the alternate carrier. For example, the UE does not determine whether the PUSCH includes the UCI any longer, but directly determines whether the licensed carrier is available in the subframe n+k. When the licensed carrier is available in the subframe n+k, the UE determines the licensed carrier as the alternate carrier, and the UE sends the PUSCH to the base station in the subframe n+k by using the licensed carrier. When the licensed carrier is unavailable in the subframe n+k, the UE determines the alternate carrier from the unlicensed carrier that is allowed to use. For a method in which the UE determines the alternate carrier from the unlicensed carrier that is allowed to use, refer to the related description in Embodiment 2. Details are not described herein again.

FIG. 7 is a flowchart of a method for transmitting a PUSCH in an LAA-LTE system according to Embodiment 3 of the present invention. As shown in FIG. 7, the method provided in this embodiment includes the following steps.

Step 301. UE receives, in a subframe n, an uplink grant message sent by a base station.

In the foregoing step, n is a system frame number or a sequence number of a subframe in which the UE receives the uplink grant message sent by the base station, and n is 0 or a positive integer.

Step 302. The UE determines, according to the uplink grant message, to send the PUSCH in a subframe n+k on a first unlicensed carrier.

In the foregoing step, n+k is a system frame number or a sequence number of a subframe in which the UE determines, according to the uplink grant message, to send the PUSCH on the first unlicensed carrier, and k is a positive integer.

Step 303. When the first unlicensed carrier is unavailable in the sub frame n+k, the UE sends the PUSCH to the base station in any one of a subframe n+k+1 to a subframe n+k+m by using the first unlicensed carrier.

A value of m is a subframe span between the subframe n+k+1 and the subframe n+k+m, or is a quantity of included subframes between the subframe n+k+1 and the subframe n+k+m; and m may also be referred to as a largest delay window, and m is a positive integer greater than or equal to 2. The largest delay window is a subframe span in which the UE is allowed to attempt to send the PUSCH to the base station, or is a window including multiple subframes in which the UE is allowed to attempt to send the PUSCH to the base station. The largest delay window m is configured by the base station. Optionally, the value of m may be configured by using RRC signaling, and may be semi-statically configured.

Specifically, the UE successively attempts to send the PUSCH to the base station in the subframe n+k+1 to the subframe n+k+m on the first unlicensed carrier, and if the PUSCH is successfully sent in any one of the subframe n+k+1 to the subframe n+k+m, ends a procedure. If the PUSCH is not successfully sent in any one of the subframe n+k+1 to the subframe n+k+m, the UE gives up sending the PUSCH to the base station.

In this embodiment, when the first unlicensed carrier is unavailable in the subframe n+k, the UE sends the PUSCH to the base station in any one of the subframe n+k+1 to the subframe n+k+m by using the first unlicensed carrier. Compared with a prior-art solution in which UE waits to send uplink data when the UE obtains an uplink grant next time, in this embodiment, a delay in sending uplink data can be reduced.

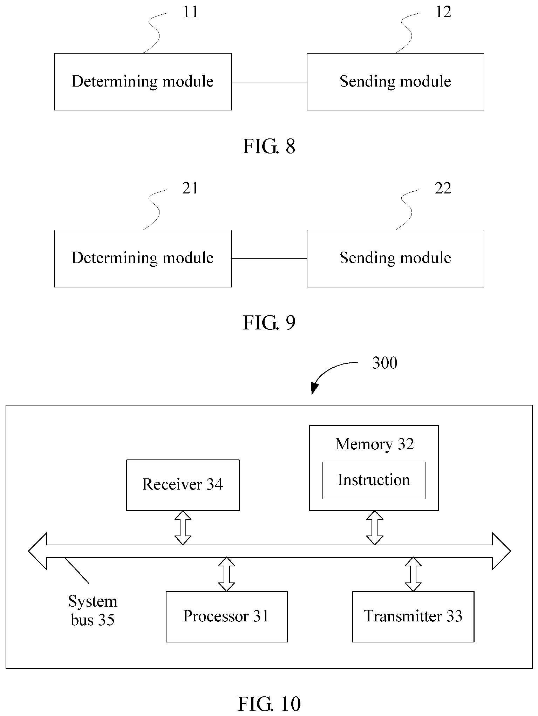

FIG. 8 is a schematic structural diagram of UE according to Embodiment 4 of the present invention. As shown in FIG. 8, the UE provided in this embodiment includes a determining module 11 and a sending module 12. The determining module 11 is configured to determine an alternate carrier when a first unlicensed carrier is unavailable in a subframe n+k. The sending module 12 is configured to send a PUSCH to the base station by using the alternate carrier, where
n is a system frame number or a sequence number of a subframe in which the UE receives an uplink grant message sent by the base station, n is 0 or a positive integer, n+k is a system frame number or a sequence number of a subframe in which the UE determines, according to the uplink grant message, to send the PUSCH on the first unlicensed carrier, and k is a positive integer.

Optionally, the determining module 11 is specifically configured to: when the PUSCH includes UCI, and a licensed carrier is available in the subframe n+k, determine the licensed carrier as the alternate carrier. Accordingly, the sending module 12 is specifically configured to send the PUSCH to the base station in the subframe n+k by using the licensed carrier.

Optionally, the determining module 11 is specifically configured to: when the PUSCH includes the UCI, and the licensed carrier is unavailable in the subframe n+k, or when the PUSCH includes no UCI, determine the alternate carrier from an unlicensed carrier that is allowed to use.

When determining the alternate carrier from the unlicensed carrier that is allowed to use, the determining module 11 is specifically configured to determine a second unlicensed carrier available in the subframe n+k as the alternate carrier. The sending module 12 is specifically configured to send the PUSCH to the base station in the subframe n+k by using the second unlicensed carrier. Alternatively, the determining module 11 determines the first unlicensed carrier as the alternate carrier. Accordingly, the sending module 12 sends the PUSCH to the base station in any one of a subframe n+k+1 to a subframe n+k+m by using the first unlicensed carrier, where m is a largest delay window, and m is a positive integer greater than or equal to 2. The largest delay window m is configured by the base station.

When sending the PUSCH to the base station in any one of the subframe n+k+1 to the subframe n+k+m by using the first unlicensed carrier, optionally, the sending module is specifically configured to: successively attempt to send the PUSCH to the base station in the subframe n+k+1 to the subframe n+k+m on the first unlicensed carrier; and if the PUSCH is successfully sent in any subframe, end a procedure; or if the PUSCH is not successfully sent in any subframe, give up sending the PUSCH to the base station.

The UE in this embodiment may be configured to execute the methods in Embodiment 1 and Embodiment 2. Specific implementations and technical effects are similar, and details are not described herein.

FIG. 9 is a schematic structural diagram of UE according to Embodiment 5 of the present invention. As shown in FIG. 9, the UE provided in this embodiment includes a determining module 21 and a sending module 22. The determining module 21 is configured to determine whether a first unlicensed carrier is available in a subframe n+k. The sending module 22 is configured to: when the determining module 21 determines that the first unlicensed carrier is unavailable in the subframe n+k, send a PUSCH to the base station in any one of a subframe n+k+1 to a subframe n+k+m by using the first unlicensed carrier, where
n is a system frame number or a sequence number of a subframe in which the UE receives an uplink grant message sent by the base station, n is 0 or a positive integer, n+k is a system frame number or a sequence number of a subframe in which the UE determines, according to the uplink grant message, to send the PUSCH on the first unlicensed carrier, k is a positive integer, m is a largest delay window, m is a positive integer greater than or equal to 2, and the largest delay window m is configured by the base station.

Optionally, the sending module 22 is specifically configured to successively attempt to send the PUSCH to the base station in the subframe n+k+1 to the subframe n+k+m on the first unlicensed carrier; and if the PUSCH is successfully sent in any subframe, end a procedure; or if the PUSCH is not successfully sent in any subframe, give up sending the PUSCH to the base station.

The UE in this embodiment may be configured to execute the method in Embodiment 3. Specific implementations and technical effects are similar, and details are not described herein.

FIG. 10 is a schematic structural diagram of UE according to Embodiment 6 of the present invention. As shown in FIG. 10, the UE 300 provided in this embodiment includes a processor 31, a memory 32, a transmitter 33, a receiver 34, and a system bus 35. The memory 32, the transmitter 33, the receiver 34, and the processor 31 are connected and implement mutual communication by using the system bus 35. The memory 32 is configured to store a computer execution instruction. The receiver 34 is configured to receive an uplink grant message sent by a base station. The processor 31 is configured to determine an alternate carrier when a first unlicensed carrier is unavailable in a subframe n+k. The transmitter 33 is configured to send a PUSCH to the base station by using the alternate carrier, where n is a system frame number or a sequence number of a subframe in which the UE receives the uplink grant message sent by the base station, n is 0 or a positive integer, n+k is a system frame number or a sequence number of a subframe in which the UE determines, according to the uplink grant message, to send the PUSCH on the first unlicensed carrier, and k is a positive integer.

Optionally, the processor 31 is specifically configured to: when the PUSCH includes UCI, and a licensed carrier is available in the subframe n+k, determine the licensed carrier as the alternate carrier; and the transmitter is specifically configured to send the PUSCH to the base station in the subframe n+k by using the licensed carrier. Optionally, the processor 31 is specifically configured to: when the PUSCH includes the UCI, and the licensed carrier is unavailable in the subframe n+k, or when the PUSCH includes no UCI, determine the alternate carrier from an unlicensed carrier that is allowed to use. In an implementation, the processor 31 determines a second unlicensed carrier available in the subframe n+k as the alternate carrier; and the transmitter 33 is specifically configured to send the PUSCH to the base station in the subframe n+k by using the second unlicensed carrier. In another implementation, the processor 31 determines the first unlicensed carrier as the alternate carrier; and the transmitter 33 is specifically configured to send the PUSCH to the base station in any one of a subframe n+k+1 to a subframe n+k+m by using the first unlicensed carrier, where m is a largest delay window, m is a positive integer greater than or equal to 2, and the largest delay window m is configured by the base station.

Optionally, the transmitter 33 is specifically configured to successively attempt to send the PUSCH to the base station in the subframe n+k+1 to the subframe n+k+m on the first unlicensed carrier; and if the PUSCH is successfully sent in any subframe, end a procedure; or if the PUSCH is not successfully sent in any subframe, give up sending the PUSCH to the base station.

The UE in this embodiment may be configured to execute the methods in Embodiment 1 and Embodiment 2. Specific implementations and technical effects are similar, and details are not described herein.

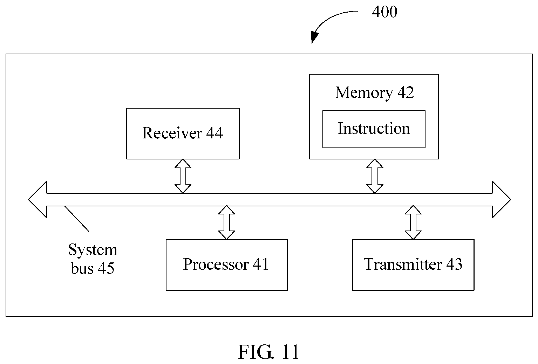

FIG. 11 is a schematic structural diagram of UE according to Embodiment 7 of the present invention. As shown in FIG. 11, the UE 400 provided in this embodiment includes a processor 41, a memory 42, a transmitter 43, a receiver 44, and a system bus 45. The memory 42, the transmitter, 43 the receiver 44, and the processor 41 are connected and implement mutual communication by using the system bus 45. The memory 42 is configured to store a computer execution instruction. The receiver 44 is configured to receive an uplink grant message sent by a base station. The processor 41 is configured to determine whether a first unlicensed carrier is available in a subframe n+k. The transmitter 43 is configured to: when the first unlicensed carrier is unavailable in the subframe n+k, send a physical uplink shared channel PUSCH to the base station in any one of a subframe n+k+1 to a subframe n+k+m by using the first unlicensed carrier, where
n is a system frame number or a sequence number of a subframe in which the UE receives the uplink grant message sent by the base station, n is 0 or a positive integer, n+k is a system frame number or a sequence number of a subframe in which the UE determines, according to the uplink grant message, to send the PUSCH on the first unlicensed carrier, k is a positive integer, m is a largest delay window, m is a positive integer greater than or equal to 2, and the largest delay window m is configured by the base station.

Optionally, the transmitter 43 is specifically configured to successively attempt to send the PUSCH to the base station in the subframe n+k+1 to the subframe n+k+m on the first unlicensed carrier; and if the PUSCH is successfully sent in any subframe, end a procedure; or if the PUSCH is not successfully sent in any subframe, give up sending the PUSCH to the base station.

The UE in this embodiment may be configured to execute the method in Embodiment 3. Specific implementations and technical effects are similar, and details are not described herein.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that he may still make modifications to the technical solutions described in the foregoing embodiments or make equivalent replacements to some or all technical features thereof, without departing from the scope of the technical solutions of the embodiments of the present invention.

## Claims

1. A method for transmitting a physical uplink shared channel, PUSCH, in a licensed-assisted access using Long Term Evolution, LAA-LTE, system, comprising:
determining (101), by user equipment, UE, an alternate carrier when a first unlicensed carrier is unavailable in a subframe n+k, and sending (102), by the UE, the PUSCH to a base station by using the alternate carrier, wherein
n is a sequence number of a subframe in which the UE receives (201, 301) an uplink grant message sent by the base station, n is 0 or a positive integer, n+k is a sequence number of a subframe in which the UE determines (202), according to the uplink grant message, to send the PUSCH on the first unlicensed carrier, and k is a positive integer;
**characterized in that** the determining (101), by the UE, an alternate carrier comprises:
when (203=YES) the PUSCH comprises uplink control information, UCI, and a licensed carrier is available in the subframe n+k, determining (204), by the UE, the licensed carrier as the alternate carrier; and
wherein the sending, by the UE, the PUSCH to the base station by using the alternate carrier comprises:
sending, by the UE, the PUSCH to the base station in the subframe n+k by using the licensed carrier; and
wherein the determining (101), by the UE, an alternate carrier comprises:
when (203=NO) the PUSCH comprises uplink control information, UCI, and a licensed carrier is unavailable in the subframe n+k, or when (206) the PUSCH comprises no UCI, determining (205), by the UE, the alternate carrier from an unlicensed carrier that is allowed to use, comprising
determining, by the UE, a second unlicensed carrier available in the subframe n+k as the alternate carrier; and
wherein the sending, by the UE, the PUSCH to the base station by using the alternate carrier comprises:
sending, by the UE, the PUSCH to the base station in the subframe n+k by using the second unlicensed carrier.

2. The method according to claim 1, wherein the determining, by the UE, the alternate carrier from an unlicensed carrier that is allowed to use comprises:
determining (302), by the UE, the first unlicensed carrier as the alternate carrier; and
wherein the sending, by the UE, the PUSCH to the base station by using the alternate carrier comprises:
sending (303), by the UE, the PUSCH to the base station in any one of a subframe n+k+1 to a subframe n+k+m by using the first unlicensed carrier, wherein m is a largest delay window, and m is a positive integer greater than or equal to 2.

3. The method according to any one of claim 2, wherein the sending, by the UE, the PUSCH to the base station in any one of a subframe n+k+1 to a subframe n+k+m by using the first unlicensed carrier comprises:
successively attempting, by the UE, to send the PUSCH to the base station in the subframe n+k+1 to the subframe n+k+m on the first unlicensed carrier; and if the PUSCH is successfully sent in any subframe, ending a procedure; or if the PUSCH is not successfully sent in any subframe, giving up, by the UE, sending the PUSCH to the base station.

4. The method according to any one of claims 2 or 3, wherein the largest delay window m is configured by the base station.

5. User equipment, UE, comprising:
a determining module (11), configured to determine an alternate carrier when a first unlicensed carrier is unavailable in a subframe n+k; and
a sending module (12), configured to send a physical uplink shared channel, PUSCH, to the base station by using the alternate carrier, wherein
n is a sequence number of a subframe in which the UE receives an uplink grant message sent by the base station, n is 0 or a positive integer, n+k is a sequence number of a subframe in which the UE determines, according to the uplink grant message, to send the PUSCH on the first unlicensed carrier, and k is a positive integer;
**characterized in that** the determining module is specifically configured to:
when the PUSCH comprises uplink control information, UCI, and a licensed carrier is available in the subframe n+k, determine the licensed carrier as the alternate carrier, and
wherein the sending module is specifically configured to send the PUSCH to the base station in the subframe n+k by using the licensed carrier; and wherein the determining module is specifically configured to:
when the PUSCH comprises the UCI, and the licensed carrier is unavailable in the subframe n+k, or when the PUSCH comprises no UCI, determine the alternate carrier from an unlicensed carrier that is allowed to use and determine a second unlicensed carrier available in the subframe n+k as the alternate carrier, and
wherein the sending module is specifically configured to send the PUSCH to the base station in the subframe n+k by using the second unlicensed carrier.

6. The UE according to claim 5, wherein the determining module is specifically configured to determine the first unlicensed carrier as the alternate carrier; and
wherein the sending module is specifically configured to send the PUSCH to the base station in any one of a subframe n+k+1 to a subframe n+k+m by using the first unlicensed carrier, wherein m is a largest delay window, and m is a positive integer greater than or equal to 2.

7. The UE according to any of claims 5 or 6, wherein the sending module is specifically configured to:
successively attempt to send the PUSCH to the base station in the subframe n+k+1 to the subframe n+k+m on the first unlicensed carrier; and
if the PUSCH is successfully sent in any subframe, end a procedure; or if the PUSCH is not successfully sent in any subframe, give up sending the PUSCH to the base station.

## Patentansprüche

1. Verfahren zum Übertragen eines PUSCH (Physical Uplink Shared Channel = physikalischer geteilter Uplink-Kanal) in einem LAA-LTE-System (Licensed-Assisted Access using Long Term Evolution = lizenzgestützter Zugang mithilfe von langfristiger Entwicklung), Folgendes umfassend:
Bestimmen (101) eines alternativen Carriers durch ein UE (User Equipment = Benutzerendgerät), wenn ein erster unlizenzierter Carrier in einem Unterrahmen n+k nicht verfügbar ist, und Senden (102) des PUSCH durch das UE an eine Basisstation mithilfe des alternativen Carriers, wobei n eine Sequenznummer eines Unterrahmens ist, in dem das UE eine Uplink-Genehmigungsnachricht empfängt (201, 301), die von der Basisstation gesendet wird, n 0 oder eine positive ganze Zahl ist, n+k eine Sequenznummer eines Unterrahmens ist, in dem das UE das Senden des PUSCH auf dem ersten unlizenzierten Carrier gemäß der Uplink-Genehmigungsnachricht bestimmt (202), und k eine positive ganze Zahl ist;
**dadurch gekennzeichnet, dass** das Bestimmen (101) eines alternativen Carriers durch das UE Folgendes umfasst:
wenn (203=JA) der PUSCH UCI (Uplink Control Information = Uplink-Kontrollinformationen) umfasst, und ein lizenzierter Carrier im Unterrahmen n+k verfügbar ist, Bestimmen (204) des lizenzierten Carriers als alternativen Carrier durch das UE; und
wobei das Senden des PUSCH durch das UE an die Basisstation mithilfe des alternativen Carriers Folgendes umfasst:
Senden des PUSCH durch das UE an die Basisstation im Unterrahmen n+k mithilfe des lizenzierten Carriers; und
wobei das Bestimmen (101) eines alternativen Carriers durch das UE Folgendes umfasst:
wenn (203=NEIN) der PUSCH UCI (Uplink Control Information = Uplink-Kontrollinformationen) umfasst, und ein lizenzierter Carrier im Unterrahmen n+k nicht verfügbar ist, oder wenn (206) der PUSCH keine UCI umfasst, Bestimmen (205) des alternativen Carriers aus einem unlizenzierten Carrier durch das UE, der zur Verwendung erlaubt ist, umfassend
Bestimmen eines zweiten unlizenzierten Carriers durch das UE, der im Unterrahmen n+k als alternativer Carrier verfügbar ist; und
wobei das Senden des PUSCH durch das UE an die Basisstation mithilfe des alternativen Carriers Folgendes umfasst:
Senden des PUSCH durch das UE an die Basisstation im Unterrahmen n+k mithilfe des zweiten unlizenzierten Carriers.

2. Verfahren nach Anspruch 1, wobei das Bestimmen des alternativen Carriers aus einem unlizenzierten Carrier durch das UE, der zur Verwendung erlaubt ist, Folgendes umfasst:
Bestimmen (302) des ersten unlizenzierten Carriers als alternativen Carrier durch das UE; und
wobei das Senden des PUSCH durch das UE an die Basisstation mithilfe des alternativen Carriers Folgendes umfasst:
Senden (303) des PUSCH durch das UE an die Basisstation in einem Unterrahmen n+k+l bis zu einem Unterrahmen n+k+m mithilfe des ersten unlizenzierten Carriers, wobei m das größte Verzögerungsfenster ist, und m eine positive ganze Zahl ist, die größer als oder gleich 2 ist.

3. Verfahren nach Anspruch 2, wobei das Senden des PUSCH durch das UE an die Basisstation in einem Unterrahmen n+k+l bis zu einem Unterrahmen n+k+m mithilfe des ersten unlizenzierten Carriers Folgendes umfasst:
sukzessives Versuchen, den PUSCH durch das UE an die Basisstation im Unterrahmen n+k+l bis zum Unterrahmen n+k+m auf dem ersten unlizenzierten Carrier zu senden; und wenn der PUSCH erfolgreich in einem Unterrahmen gesendet wird, Beenden des Vorgangs; oder wenn der PUSCH nicht erfolgreich in einem Unterrahmen gesendet wird, Aufgeben des PUSCH-Sendens durch das UE an die Basisstation.

4. Verfahren nach einem der Ansprüche 2 oder 3, wobei das größte Verzögerungsfenster m von der Basisstation konfiguriert wird.

5. UE (User Equipment = Benutzerendgerät), Folgendes umfassend:
ein Bestimmungsmodul (11), das zum Bestimmen eines alternativen Carriers konfiguriert ist, wenn ein erster unlizenzierter Carrier in einem Unterrahmen n+k nicht verfügbar ist; und
ein Sendemodul (12), das für das Senden eines PUSCH (Physical Uplink Shared Channel = physikalischer geteilter Uplink-Kanal) an die Basisstation mithilfe eines alternativen Carriers konfiguriert ist, wobei
n eine Sequenznummer eines Unterrahmens ist, in dem das UE eine Uplink-Genehmigungsnachricht empfängt, die von der Basisstation gesendet wird, n 0 oder eine positive ganze Zahl ist, n+k eine Sequenznummer eines Unterrahmens ist, in dem das UE das Senden des PUSCH auf dem ersten unlizenzierten Carrier gemäß der Uplink-Genehmigungsnachricht bestimmt, und k eine positive ganze Zahl ist;
**dadurch gekennzeichnet, dass** das Bestimmungsmodul speziell für Folgendes konfiguriert ist:
wenn der PUSCH UCI (Uplink Control Information = Uplink-Kontrollinformationen) umfasst, und ein lizenzierter Carrier im Unterrahmen n+k verfügbar ist, zum Bestimmen des lizenzierten Carriers als alternativen Carrier, und
wobei das Sendemodul speziell für das Senden des PUSCH an die Basisstation im Unterrahmen n+k mithilfe des lizenzierten Carriers konfiguriert ist; und wobei das Bestimmungsmodul speziell für Folgendes konfiguriert ist:
wenn der PUSCH UCI umfasst, und der lizenzierte Carrier im Unterrahmen n+k nicht verfügbar ist, oder wenn der PUSCH keine UCI umfasst, zum Bestimmen des alternativen Carriers aus einem unlizenzierten Carrier, der zur Verwendung erlaubt ist, und zum Bestimmen eines zweiten unlizenzierten Carriers, der im Unterrahmen n+k als alternativer Carrier verfügbar ist, und
wobei das Sendemodul speziell für das Senden des PUSCH an die Basisstation im Unterrahmen n+k mithilfe des zweiten unlizenzierten Carriers konfiguriert ist.

6. UE nach Anspruch 5, wobei das Bestimmungsmodul speziell für das Bestimmen des ersten unlizenzierten Carriers als alternativen Carrier konfiguriert ist; und
wobei das Sendemodul speziell für das Senden des PUSCH an die Basisstation in einem Unterrahmen n+k+l bis zu einem Unterrahmen n+k+m mithilfe des ersten unlizenzierten Carriers konfiguriert ist, wobei m das größte Verzögerungsfenster ist, und m eine positive ganze Zahl ist, die größer als oder gleich 2 ist.

7. UE nach einem der Ansprüche 5 oder 6, wobei das Sendemodul speziell für Folgendes konfiguriert ist:
zum sukzessiven Versuchen, den PUSCH an die Basisstation im Unterrahmen n+k+l bis zum Unterrahmen n+k+m auf dem ersten unlizenzierten Carrier zu senden; und
wenn der PUSCH erfolgreich in einem Unterrahmen gesendet wird, zum Beenden des Vorgangs; oder wenn der PUSCH nicht erfolgreich in einem Unterrahmen gesendet wird, zum Aufgeben des PUSCH-Sendens an die Basisstation.

## Revendications

1. Procédé de transmission d'un canal partagé de liaison montante physique, PUSCH, dans un système d'accès assisté sous licence à l'aide d'une évolution à long terme, LAA-LTE, comprenant :
la détermination (101), par un équipement utilisateur, UE, d'une porteuse alternative lorsqu'une première porteuse sans licence n'est pas disponible dans une sous-trame n+k, et l'envoi (102), par l'UE, du PUSCH à une station de base à l'aide de la porteuse alternative, dans lequel n est un numéro de séquence d'une sous-trame dans laquelle l'UE reçoit (201, 301) un message d'allocation de liaison montante envoyé par la station de base, n est 0 ou un entier positif, n+k est un numéro de séquence d'une sous-trame dans laquelle l'UE détermine (202), en fonction du message d'allocation de liaison montante, d'envoyer le PUSCH sur la première porteuse sans licence, et k est un nombre entier positif ;
**caractérisé en ce que** la détermination (101), par l'UE, d'une porteuse alternative comprend : lorsque (203=OUI) le PUSCH comprend des informations de commande de liaison montante, UCI et qu'une porteuse sous licence est disponible dans la sous-trame n+k, la détermination (204), par l'UE, de la porteuse sous licence comme porteuse alternative ; et
dans lequel l'envoi, par l'UE, du PUSCH à la station de base à l'aide de la porteuse alternative comprend :
l'envoi, par l'UE, du PUSCH à la station de base de la sous-trame n+k à l'aide de la porteuse sous licence ; et
dans lequel la détermination (101), par l'UE, d'un support alternatif comprend :
lorsque (203=NON) le PUSCH comprend des informations de commande de liaison montante, UCI, et qu'une porteuse sous licence n'est pas disponible dans la sous-trame n+k, ou lorsque (206) le PUSCH ne comprend pas d'UCI, la détermination (205), par l'UE, de la porteuse alternative à partir d'une porteuse sans licence qui est autorisée à être utilisée, comprenant
la détermination, par l'UE, d'une seconde porteuse sans licence disponible dans la sous-trame n+k comme porteuse alternative ; et
dans lequel l'envoi, par l'UE, du PUSCH à la station de base à l'aide de la seconde porteuse alternative comprend :
l'envoi, par l'UE, du PUSCH à la station de base de la sous-trame n+k à l'aide de la porteuse sans licence.

2. Procédé selon la revendication 1, dans lequel la détermination, par l'UE, de la porteuse alternative à partir d'une porteuse sans licence qui est autorisé à être utilisée comprend :
la détermination (302), par l'UE, de la première porteuse sans licence comme porteuse alternative ; et
dans lequel l'envoi, par l'UE, du PUSCH à la station de base à l'aide de la porteuse alternative comprend :
l'envoi (303), par l'UE, du PUSCH à la station de base dans l'une quelconque d'une sous-trame n+k+1 à une sous-trame n+k+m à l'aide de la première porteuse sans licence, dans lequel m est une fenêtre de retard maximale, et m est un nombre entier positif supérieur ou égal à 2.

3. Procédé selon l'une quelconque de la revendication 2, dans lequel l'envoi, par l'UE, du PUSCH à la station de base dans l'une quelconque d'une sous-trame n+k+1 à une sous-trame n+k+m à l'aide de la première porteuse sans licence comprend :
la tentative successive, par l'UE, d'envoyer le PUSCH à la station de base dans la sous-trame n+k+1 à la sous-trame n+k+m sur la première porteuse sans licence ; et si le PUSCH est envoyé avec succès dans une sous-trame quelconque, l'arrêt d'une procédure ; ou si le PUSCH n'est pas envoyé avec succès dans une sous-trame quelconque, l'abandon, par l'UE, de l'envoi du PUSCH à la station de base.

4. Procédé selon l'une quelconque des revendications 2 ou 3, dans lequel la plus grande fenêtre de retard est configurée par la station de base.

5. Équipement utilisateur, UE, comprenant :
un module de détermination (11), configuré pour déterminer une porteuse alternative lorsqu'une première porteuse sans licence n'est pas disponible dans une sous-trame n+k ; et
un module d'envoi (12), configuré pour envoyer un canal partagé de liaison montante physique, PUSCH, à la station de base à l'aide de la porteuse alternative, dans lequel n est un numéro de séquence d'une sous-trame dans laquelle l'UE reçoit un message d'allocation de liaison montante envoyé par la station de base, n est 0 ou un entier positif, n+k est un numéro de séquence d'une sous-trame dans laquelle l'UE détermine, selon le message d'allocation de liaison montante, l'envoi du PUSCH sur la première porteuse sans licence et k est un entier positif ;
**caractérisé en ce que** le module de détermination est spécifiquement configuré pour :
lorsque le PUSCH comprend des informations de commande de liaison montante, les UCI et une porteuse sous licence est disponible dans la sous-trame n+k, déterminer la porteuse sous licence comme porteuse alternative, et
dans lequel le module d'envoi est spécifiquement configuré pour envoyer le PUSCH à la station de base dans la sous-trame n+k à l'aide de la porteuse sous licence ; et dans lequel le module de détermination est spécifiquement configuré pour :
lorsque le PUSCH comprend les UCI, et que la porteuse sous licence n'est pas disponible dans la sous-trame n+k, ou lorsque le PUSCH ne comprend pas d'UCI, déterminer la porteuse alternative d'une porteuse sans licence qui est autorisée à être utilisée et déterminer une seconde porteuse sans licence disponible dans la sous-trame n+k comme porteuse alternative, et
dans lequel le module d'envoi est spécifiquement configuré pour envoyer le PUSCH à la station de base dans la sous-trame n+k à l'aide de la seconde porteuse sans licence.

6. Équipement utilisateur selon la revendication 5, dans lequel le module de détermination est spécifiquement configuré pour déterminer la première porteuse sans licence comme porteuse alternative ; et
dans lequel le module d'envoi est spécifiquement configuré pour envoyer le PUSCH à la station de base dans l'une quelconque d'une sous-trame n+k+1 à une sous-trame n+k+m à l'aide de la première porteuse sans licence, dans lequel m est une fenêtre de retard maximale, et m est un nombre entier positif supérieur ou égal à 2.

7. Équipement utilisateur selon l'une quelconque des revendications 5 ou 6, dans lequel le module d'envoi est spécifiquement configuré pour :
tenter successivement d'envoyer le PUSCH à la station de base dans la sous-trame n+k+1 à la sous-trame n+k+m sur la première porteuse sans licence ; et
si le PUSCH est envoyé avec succès dans n'importe quelle sous-trame, arrêter une procédure ; ou si le PUSCH n'est pas envoyé avec succès dans une sous-trame, abandonner l'envoi du PUSCH à la station de base.
